# EUROPÄISCHE PATENTSCHRIFT

(11) **EP 1 556 656 B1**
(45) Veröffentlichungstag und Bekanntmachung des Hinweises auf die Patenterteilung: **12.10.2011**
(21) Anmeldenummer: 03779817.0
(22) Anmeldetag: 29.10.2003
(51) Int. Cl.: F26B 21/00

(54) **VERFAHREN ZUR KONVEKTIVEN TROCKNUNG VON NASS- ODER FEUCHTGUT**
METHOD FOR CONVECTIVELY DRYING WET OR MOIST STOCK
PROCEDE DE SECHAGE PAR CONVECTION DE MATIERE MOUILLEE OU HUMIDE

(30) Priorität: 30.10.2002 DE 10250784
(43) Veröffentlichungstag der Anmeldung: 27.07.2005
(73) Patentinhaber: Klein Technical Solutions GmbH, 57572 Niederfischbach (DE)
(72) Erfinder: TOMALLA, Manfred, 57223 Kreuztal (DE); WOLDERT, Frank, 57572 Niederfischbach (DE)
(74) Vertreter: Schneiders, Josef
(86) Internationale Anmeldenummer: PCT/EP2003/011996
(87) Internationale Veröffentlichungsnummer: WO 2004/040215

(56) Entgegenhaltungen:
- WO-A-03/092902
- DE-A- 3 920 067
- DE-A- 4 237 462
- DE-A- 19 736 293
- FR-A- 2 167 291
- US-A- 3 111 398
- US-A- 4 187 615
- US-A- 5 050 316

## Beschreibung

Die Erfindung betrifft ein Verfahren zur konvektiven Trocknung von Naß- oder Feuchtgut, wobei das zu trocknende Gut in einem Trockner mit einem Trocknungsgas beaufschlagt wird, welches beim Trocknungsvorgang in dem zu trocknenden Gut enthaltenes Wasser aufnimmt und welches nach dem Trocknungsvorgang aus dem Trockner als Abgas abgeführt wird, und wobei zumindest ein Teilvolumen des Trocknungsgases beim Trocknungsvorgang ionisiert ist und wobei das Abgas einer Behandlung durch Ionisieren unterzogen wird oder mit ionisiertem Gas vermischt wird. Ferner betrifft die Erfindung eine Trocknungsanlage zur Durchführung des Verfahrens.

Aus der industriellen und kommunalen Abwasserreinigung fallen große Klärschlammengen an, welche als sehr wasserreiche Rohschlämme vorliegen. Bevor diese Schlämme einer weiteren Verwendung, beispielsweise als Dünger in der Landwirtschaft oder auch als Brennstoff, zugeführt werden können, kann es erforderlich sein, dass zum Zwecke der Entwässerung eine Trocknung durchgeführt wird. In jedem Fall ist es wünschenswert, einen möglichst hoch entwässerten Schlamm zu erhalten, sei es aufgrund der besseren Lagerfähigkeit oder aus energetischen Gründen, falls die Schlämme zum Zwecke der Mineralisierung einer Verbrennung zugeführt werden sollen.

Zur Entwässerung werden bekannte Trocknungsverfahren der eingangs genannten Art eingesetzt. Derartige Verfahren sind zur Trocknung von Abwasserreinigungsprodukten, wie industriellen und kommunalen Klärschlämmen, Papierschlämmen, Flotatschlämmen, Rechengut und Sandfanggut gleichermaßen geeignet wie zur Trocknung von Müll und anderen organischen Reststoffen, Gärrückständen, Produkten aus mechanischbiologischen Abfallbehandlungsanlagen, Bioabfällen sowie auch Holz, Grünund Heckenschnitt. Bei solchen Trocknungsverfahren wird das zu trocknende Gut bekanntermaßen mit Luft, Rauchgas oder einem anderen Trocknungsgas in Verbindung gebracht, welches das in dem zu trocknenden Gut enthaltene Wasser aufnimmt und im Abgas abtransportiert. Als Trockner können dabei beispielsweise bekannte Bandtrockner, Trommeltrockner oder auch unter Ausnutzung des Sonnenlichts arbeitende Gewächshaustrockner zum Einsatz kommen.

Problematisch ist, dass das bei bekannten Trocknungsverfahren anfallende Abgas je nach Beschaffenheit des zu trocknenden Naß- oder Feuchtguts mit Geruchs- und Schadstoffen und auch mit Keimen belastet sein kann. Derartige Abgase können in der Regel nicht ohne vorherige Behandlung in die Umwelt abgegeben werden. Insbesondere bei der Trocknung von stark riechenden Klärschlämmen bestehen Akzeptanzprobleme durch die Öffentlichkeit, mit welchen sich die Betreiber entsprechender Anlagen auseinandersetzen müssen.

Zur Umgehung dieser Probleme ist es bekannt, Biowäscher oder Biofilter einzusetzen, was jedoch aufgrund des damit verbundenen hohen Investitionsund Wartungsaufwands mit Nachteilen verbunden ist.

Nachteilig ist bei bekannten Verfahren zur Trocknung von Schlämmen und anderen organischen Abfällen des weiteren, dass diese häufig mit mikrobiellen Komponenten belastet sind, durch welche die Entwässerung stark behindert wird. In der Regel ist zum Abbau dieser organischen Bestandteile eine oxidative oder thermische Behandlung des zu trocknenden Guts erforderlich. Hierzu sind nachteiligerweise zusätzliche Verfahrensschritte und gegebenenfalls der Einsatz von Reagenzien bzw. ein hoher Energieaufwand nötig. Hierdurch entstehen zum Teil nicht unerhebliche Zusatzkosten.

Im Stand der Technik existieren zudem Verfahren, bei welchen ein Teilvolumen des Trocknungsgases ionisiert ist. Durch den Einsatz von ionisiertem Trocknungsgas wird der gewünschte Abbau von organischen Komponenten in dem zu trocknenden Gut vorteilhafterweise gefördert; es kommt somit zu einer Hygienisierung. Gleichzeitig bewirkt das Verfahren eine effektive Geruchsminderung, da die beim Trocknungsvorgang in das Trocknungsgas aus dem zu trocknenden Gut übergehenden Geruchsstoffe und Keime durch die Ionisierung des Trocknungsgases oxidiert, bzw. getötet werden, noch bevor das Trocknungsgas als Abgas aus dem Trockner abgeführt wird. Dadurch kann der Einsatz von kostenintensiven Biowäschern oder Biofiltern im Abgasstrom eingespart werden.

Aus der DE 197 36 293 A1 ist ein Verfahren und eine Vorrichtung zur Reinigung von schadstoff- und geruchsbelasteter Luft bekannt. Die beschriebene Vorrichtung berücksichtigt, dass, beispielsweise in Trocknungsanlagen, sowohl das zu trocknende Gut als auch die aus der Trocknungsanlage abgeführte Abluft geruchlich neutralisiert werden müssen. Dies erfolgt durch Ionisation der Raumluft und zusätzlich dadurch, dass die abgeführte Abluft mit ionisierter Frischluft vermischt wird.

Nachteilig bei diesem Verfahren ist, dass zwei separate lonisatoren erforderlich sind, von denen einer zur Ionisation der Raumluft und der zweite zur Ionisation der mit der Abluft vermischten Frischluft benötigt wird. Der Einsatz von zwei separaten lonisatoren hat hohe Investitions- und Betriebskosten zur Folge.

Davon ausgehend liegt der vorliegenden Erfindung die Aufgabenstellung zugrunde, ein weiterentwickeltes Verfahren zur konvektiven Trocknung von Nass- oder Feuchtgut bereitzustellen, bei dem die genannten Nachteile und Probleme soweit wie möglich vermieden werden. Ebenso soll das Verfahren mit möglichst geringem apparativen Aufwand und dadurch auch besonders kostengünstig durchgeführt werden können.

Zur Lösung dieser Aufgabe schlägt die Erfindung vor, dass das Trocknungsgas, bevor es dem Trockner zugeführt wird, mit einem Teilstrom des ionisierten Abgases vermischt wird. Dies kann z.B. dadurch erreicht werden, dass ein Teilstrom des ionisierten Abgases in den Trockner zurückgeführt wird, wo es sich mit dem Trocknungsgas vermischt und dort die oben beschriebenen vorteilhaften Wirkungen entfaltet. Auf diese Weise ergibt sich eine besonders einfache und kostengünstige Realisierbarkeit des erfindungsgemäßen Verfahrens, da lediglich eine Ionisierung im Abgasstrom erforderlich ist. Das gemäß der Erfindung teilweise ionisierte Trocknungsgas wird dabei durch Vermischen mit dem ionisierten Abgas erzeugt.

Zur Ionisierung können handelsübliche lonisatoren eingesetzt werden. Es ist z. B. möglich, das Abgas an unter Hochspannung stehenden Elektroden vorbeizuführen. Alternativ ist eine Ionisierung durch Lichtbogenentladung möglich. Gegebenenfalls können geeignete UV-Lampen zur Ionisierung eingesetzt werden. Falls eine direkte Ionisierung des Abgases nicht möglich ist, weil es etwa nach der Trocknung mit Wasserdampf übersättigt ist und Nebeltröpfchen enthält, oder weil sich Staubpartikel in dem Abgas befinden, so besteht die Möglichkeit, zur Geruchsminderung dem Abgas ionisiertes Gas zuzumischen. Je nach Beschaffenheit des zu trocknenden Gutes kann es erforderlich sein, das Abgas mittels eines Wäschers und/oder mittels eines Filters vorzubehandeln, bevor es der Ionisierung unterzogen wird, bzw. bevor es mit ionisiertem Gas vermischt wird.

Ebenso besteht die Möglichkeit, das Trocknungsgas mittels eines eigens hierfür bestimmten lonisators zu ionisieren, bevor es dem Trockner zugeführt wird. Es besteht die Möglichkeit, zur Ionisierung des Trocknungsgases die im Sonnenlicht enthaltene UV-Strahlung auszunutzen. Alternativ kann das Trocknungsgas durch einen in dem Trockner befindlichen lonisator ionisiert werden. Es ist auf besonders einfache Weise möglich, in herkömmlichen Trocknern einen Ionisator, beispielsweise in Form einer UV-Lampe, anzubringen. Dies hat den Vorteil, daß das Trocknungsgas unmittelbar beim Trocknungsvorgang ionisiert wird und daß ferner das zu trocknende Gut selbst mit UV-Strahlung bestrahlt wird, was eine biozide Wirkung hat und außerdem den oxidativen Abbau der in dem zu trocknenden Gut enthaltenen organischen Komponenten fördert.

Zweckmäßigerweise sollte das Trocknungsgas erhitzt werden, bevor es dem Trockner zugeführt wird, damit dem Naß- oder Feuchtgut möglichst viel Wasser entzogen werden kann. Es kann zweckmäßig sein, das Trocknungsgas zu entfeuchten, bevor es erhitzt wird. Hierzu kann das Trocknungsgas beispielsweise mittels einer geeigneten Wärmepumpe abgekühlt werden, so daß in dem Trocknungsgas enthaltenes Wasser kondensiert und abgeführt werden kann.

Zur Durchführung des erfindungsgemäßen Verfahrens eignet sich eine Trocknungsanlage mit Mitteln zur Zuführung von Naß- oder Feuchtgut in einen Trockner, Mitteln zur Abfuhr von Trockengut aus dem Trockner, einer Trocknungsgas-Zuleitung, über welche dem Trockner Trocknungsgas zugeführt wird, und einer Abgas-Leitung, über welche Abgas aus dem Trockner abgeführt wird, wobei in der Trocknungsgas-Zuleitung ein lonisator angeordnet ist. Es besteht die Möglichkeit, bei einer derartigen Trocknungsanlage einen in der Abgasleitung angeordneten Ionisator und einen in Abgas-Strömungsrichtung hinter dem Ionisator angeordneten Abzweig vorzusehen, über welchen ein Teil des ionisierten Abgases in den Trockner zurückgeführt wird. Hierdurch besteht die Möglichkeit, gemäß der Erfindung ionisiertes Trocknungsgas bereitzustellen, indem das Trocknungsgas mit einem Teil des ionisierten Abgases vermischt wird. Wie oben beschrieben, kann es zweckmäßig sein, einen lonisator direkt in dem Trockner anzuordnen, wobei sich insbesondere die Verwendung einer UV-Lampe anbietet.

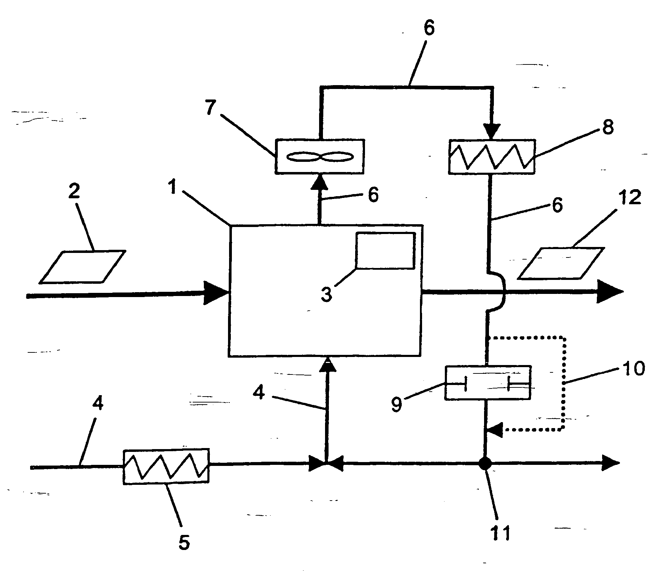

Ein Ausführungsbeispiel der Erfindung wird im folgenden anhand der Zeichnung erläutert.

Die Zeichnung zeigt ein Blockdiagramm einer erfindungsgemäßen Trocknungsanlage. Im Zentrum der Trocknungsanlage steht ein Trockner 1, welchem über nicht näher dargestellte Fördermittel Feuchtgut 2 zugeführt wird. Im Trockner 1 wird das Feuchtgut mit einem Trocknungsgas beaufschlagt, welches durch einen UV-Strahler 3 ionisiert wird. Das Trocknungsgas wird dem Trockner 1 über eine Trocknungsgas-Zuleitung 4 zugeführt. In dieser Zuleitung befindet sich eine Heizvorrichtung 5 zur Aufheizung des Trocknungsgases. Zur Abführung des mit Feuchtigkeit beladenen Abgases aus dem Trockner 1 ist eine Abgas-Leitung 6 vorgesehen. Das Abgas wird mittels eines Ventilators 7 aus dem Trockner 1 herausgefördert. Zusätzlich ist in der Abgas-Leitung 6 eine weitere Heizvorrichtung 8 vorgesehen, um eine Übersättigung des Abgases mit Wasserdampf und eine etwaige Nebelbildung zu vermeiden. Hinter der Heizvorrichtung 8 ist in der Abgas-Leitung 6 ein lonisator 9 vorgesehen, durch welchen eine weitere Reduzierung der in dem Abgas vorhandenen Geruchsstoffe und Keime erreicht wird. Je nach Auslegung der Trocknungsanlage kann zur Umgehung des lonisators 9 ein Bypass 10 vorgesehen sein, so daß nur ein Teilstrom des Abgases ionisiert wird. Über einen Abzweig 11 wird gemäß der Erfindung ein Teil des ionisierten Abgases mit dem Trocknungsgas vermischt und über die Trocknungsgas-Zuleitung 4 in den Trockner 1 zurückgeführt. Das übrige Abgas wird an die Umwelt abgegeben. Nach dem Trocknungsvorgang wird mittels nicht näher dargestellter geeigneter Fördermittel Trockengut 12 aus dem Trockner 1 abgeführt.

## Patentansprüche

1. Verfahren zur konvektiven Trocknung von Naß- oder Feuchtgut, wobei das zu trocknende Gut in einem Trockner (1) mit einem Trocknungsgas beaufschlagt wird, welches beim Trocknungsvorgang in dem zu trocknenden Gut (2) enthaltenes Wasser aufnimmt und welches nach dem Trocknungsvorgang aus dem Trockner (1) als Abgas abgeführt wird, und wobei zumindest ein Teilvolumen des Trocknungsgases beim Trocknungsvorgang ionisiert ist und wobei das Abgas einer Behandlung durch Ionisieren unterzogen wird oder mit ionisiertem Gas vermischt wird,
**dadurch gekennzeichnet, dass** das Trocknungsgas, bevor es dem Trockner (1) zugeführt wird, mit einem Teilstrom des ionisierten Abgases vermischt wird.

2. Verfahren nach Anspruch 1, **dadurch gekennzeichnet, daß** das Abgas mittels eines Wäschers und/oder mittels eines Filters behandelt wird, bevor es der Ionisierung unterzogen wird bzw. bevor es mit ionisiertem Gas vermischt wird.

3. Verfahren nach einem der Ansprüche 1 und 2, **dadurch gekennzeichnet, daß** das Trocknungsgas durch einen in dem Trockner (1) befindlichen Ionisator (3) ionisiert wird.

4. Verfahren nach einem der Ansprüche 1 bis 3, **dadurch gekennzeichnet, daß** das Trocknungsgas erhitzt wird, bevor es dem Trockner (1) zugeführt wird.

5. Verfahren nach Anspruch 4, **dadurch gekennzeichnet, daß** das Trocknungsgas entfeuchtet wird, bevor es erhitzt und dem Trockner (1) zugeführt wird.

6. Trocknungsanlage mit Mitteln zur Zuführung von Naßoder Feuchtgut (2) in einen Trockner (1), Mitteln zur Abfuhr von Trockengut (12) aus dem Trockner (1), einer Trocknungsgas-Zuleitung (4), über welche dem Trockner (1) Trocknungsgas zugeführt wird, und einer Abgas-Leitung (6), über welche Abgas aus dem Trockner (1) abgeführt wird, **gekennzeichnet durch** einen in der Abgas-Leitung (6) angeordneten lonisator (9) und einen in Abgas-Strömungsrichtung hinter dem lonisator (9) angeordneten Abzweig (11), über welchen ein Teil des ionisierten Abgases in den Trockner (1) zurückgeführt wird.

7. Trocknungsanlage nach Anspruch 6, **gekennzeichnet durch** einen in dem Trockner (1) angeordneten lonisator (3).

## Claims

1. A method of convective drying of wet or moist material, wherein the material to be dried is acted upon in a drier (1) with a drying gas which in the drying operation absorbs water contained in the material (2) to be dried and which is discharged from the drier (1) as waste gas after the drying operation, and wherein at least a partial volume of the drying gas is ionised in the drying operation and wherein the waste gas is subjected to a treatment by ionisation or is mixed with ionised gas,
**characterised in that** before the drying gas is fed to the drier (1) it is mixed with a partial flow of the ionised waste gas.

2. A method according to claim 1 **characterised in that** the waste gas is treated by means of a washer and/or by means of a filter before it is subjected to ionisation or before it is mixed with ionised gas.

3. A method according to one of claims 1 and 2 **characterised in that** the drying gas is ionised by an ioniser (3) disposed in the drier (1).

4. A method according to one of claims 1 to 3 **characterised in that** the drying gas is heated before it is fed to the drier (1).

5. A method according to claim 4 **characterised in that** moisture is removed from the drying gas before it is heated and fed to the drier (1).

6. A drying installation having means for feeding wet or moist material (2) into a drier (1), means for the discharge of dry material (12) from the drier (1), a drying gas feed conduit (4), by way of which drying gas is fed to the drier (1), and a waste gas conduit (6), by way of which waste gas is discharged from the drier (1), **characterised by** an ioniser (9) arranged in the waste gas conduit (6) and a branching (11) which is arranged downstream of the ioniser (9) in the waste gas flow direction and by way of which a part of the ionised waste gas is fed back into the drier (1).

7. A drying installation according to claim 6 **characterised by** an ioniser (3) arranged in the drier (1).

## Revendications

1. Procédé de séchage par convexion de matière mouillée ou humide, où la matière à sécher est chargée dans un séchoir (1) avec un gaz de séchage qui, lors de l'opération de séchage, absorbe de l'eau contenue dans la matière (2) à sécher et qui, après l'opération de séchage, est évacué du séchoir (1) sous forme de gaz résiduaire, et où au moins un volume partiel du gaz de séchage, lors de l'opération de séchage, est ionisé, et où le gaz résiduaire est soumis à un traitement par ionisation ou est mélangé avec du gaz ionisé, **caractérisé en ce que** le gaz de séchage, avant qu'il ne soit amené au séchoir (1), est mélangé avec un flux partiel du gaz résiduaire ionisé.

2. Procédé selon la revendication 1, **caractérisé en ce que** le gaz résiduaire est traité au moyen d'un dispositif de lavage et/ou au moyen d'un filtre avant qu'il ne soit soumis à l'ionisation respectivement avant qu'il ne soit mélangé avec le gaz ionisé.

3. Procédé selon l'une des revendications 1 et 2, **caractérisé en ce que** le gaz de séchage est ionisé par un ionisateur (3) se trouvant dans le séchoir (1).

4. Procédé selon l'une des revendications 1 à 3, **caractérisé en ce que** le gaz de séchage est chauffé avant qu'il ne soit amené au séchoir (1).

5. Procédé selon la revendication 4, **caractérisé en ce que** le gaz de séchage est déshumidifié avant qu'il ne soit chauffé et amené au séchoir (1).

6. Installation de séchage avec des moyens pour l'amenée d'une matière mouillée ou humide (2) dans un séchoir (1), des moyens pour évacuer la matière séchée (12) du séchoir (1), une conduite d'amenée de gaz de séchage (4) par laquelle du gaz de séchage est amené au séchoir (1), et une conduite de gaz résiduaire (6) par laquelle le gaz résiduaire est évacué du séchoir (1), **caractérisé par** un ionisateur (9) disposé dans la conduite de gaz résiduaire (6) et un branchement (11) disposé dans la direction d'écoulement du gaz résiduaire en aval de l'ionisateur (9) par lequel une partie du gaz résiduaire ionisé est ramenée dans le séchoir (1).

7. Installation de séchage selon la revendication 6, **caractérisé par** un ionisateur (3) disposé dans le séchoir (1).
